# EUROPÄISCHE PATENTANMELDUNG

(11) **EP 2 658 217 A1**
(43) Veröffentlichungstag der Anmeldung: **30.10.2013**
(21) Anmeldenummer: 12165297.8
(22) Anmeldetag: 24.04.2012
(51) Int. Cl.: H04L 29/12, G06F 21/10, G06F 21/60, G06F 21/62

(54) **Verfahren und Vorrichtung zum Speichern, Verwalten und Anwenden von Rechten zur Nutzung einer Ressource**

(71) Anmelder: DomiNIC GmbH, 53332 Bornheim (DE)
(72) Erfinder: Wabnitz, Sven-Holger, 53225 Bonn (DE)
(74) Vertreter: Lippert, Stachow & Partner

(57) **Zusammenfassung**

Die Erfindung betrifft Verfahren zum Speichern, Verwalten und Anwenden von Rechten zur Nutzung einer Ressource, bei welchem ein Nutzungsrecht der Ressource (110, 140) durch eine Rechteinformation (3101, 2103, 6102) festlegt wird, und die der Ressource zugeordnete Rechteinformation mittels einer der Ressource zugeordneten Software-Komponente (120) abgefragt und ausgewertet wird, und die Nutzung der Ressource gemäß der dieser Ressource zugeordneten Rechteinformation freigegeben wird, wobei ein der Rechteinformation der Ressource zugeordneter Datensatz in einem Computersystem (200) gespeichert wird. Das erfindungsgemäße Verfahren zeichnet sich dadurch aus, dass der der Rechteinformation zugeordnete Datensatz im Computersystem unter Verwendung von Protokollen und Datenstrukturen eines hierarchisch strukturierten Domainnamen-Systems (DNS: Domain Name System) als zumindest eine Informationseinheit (Resource Record (RR)) gespeichert, verwaltet und zum Abruf bereitgehalten wird, wobei durch die der Ressource zugeordnete Software-Komponente an das Computersystem ein DNS-Protokoll-konformer Abruf zur Abfrage des Datensatzes gestellt wird. Die Erfindung betrifft ferner eine Anordnung von Computersystemen zur Umsetzung eines solchen Verfahrens.

## Beschreibung

Die Erfindung betrifft ein Verfahren und eine Vorrichtung zum Speichern, Verwalten und Anwenden von Rechten zur Nutzung einer Ressource, bei welchem ein Nutzungsrecht der Ressource durch eine Rechteinformation festgelegt wird und die der Ressource zugeordnete Rechteinformation mittels einer der Ressource zugeordneten Software-Komponente abgefragt und ausgewertet wird und die Nutzung der Ressource gemäß der dieser Ressource zugeordneten Rechteinformation freigegeben wird, wobei ein der Rechteinformation der Ressource zugeordneter Datensatz in einem Computersystem gespeichert wird.

Derartige Verfahren sind auf dem Gebiet wohlbekannt. In der Regel implementieren jedoch viele Hersteller für die Rechteverwaltung und Lizenzierung derartiger Ressourcen wie Software und digitale Inhalte, beispielsweise Musikstücke oder Texte, eigene proprietäre Verfahren, welche häufig auf den unterschiedlichsten Schlüssel- und Sicherheitskonzepten basieren. Lizenzschlüssel, welche die Berechtigung der jeweiligen Benutzer für die Nutzung der Software oder der digitalen Inhalte darstellen und deren Anwendung erst ermöglichen, müssen erzeugt und an viele Nutzer bzw. Computersysteme verteilt werden. Diese Erzeugung und die für den Lizenzanbieter sicherheitsrelevante Verteilung erweist sich oft als sehr aufwendig. Häufig werden Lizenzschlüssel auf unsicherem Wege an den Nutzer ausgeliefert, z.B. über E-Mail oder andere unsichere Informationskanäle mit der Gefahr, dass Lizenzen in nichtberechtigte Hände gelangen. Die Gültigkeit eines einmal verteilten, zeitlich unbegrenzt geltenden Lizenzschlüssels kann nicht mehr rückgängig gemacht werden. Bei einer Verlängerung einer zeitlich begrenzten Lizenz muss häufig mehrmals ein Schlüssel erzeugt und verteilt werden. Ist die Ressource eine Software, ist bei der Rechteverwaltung und Lizenzierung der Ressource deren Hersteller in der Regel darauf angewiesen, eine relativ statische Art der Nutzungslizenzierung zu verwenden. Flexible Nutzungsmodelle, wie Miete oder dynamische Nutzungsüberlassungen werden durch die eingesetzten Verfahren massiv erschwert oder gar verhindert.

Ähnliche Schwierigkeiten ergeben sich beim Verwalten und Anwenden von Rechten zur Nutzung von Hardware, beispielsweise beim Einsatz von Hardware in Geräten oder Anlagen. Häufig kann kompatible Hardware eingesetzt werden, was vom Hersteller eines Gerätes jedoch oft nicht gewünscht ist. Bislang sind keine ausreichenden bzw. einfachen Möglichkeiten zur Nutzungskontrolle über den Einsatz solcher Fremdbauteile bekannt, sodass dem Hersteller durch die Nutzung dieser Fremdbauteile unter Umständen Lizenzeinnahmen entgehen.

Gerade im Bereich des Rechtemanagements für digitale Inhalte (Digital Rights Management: DRM), beispielsweise digital vorliegende Film- und Tonaufnahmen, elektronische Dokumente oder elektronische Bücher gibt es eine große Vielfalt von proprietären Lösungen. Dagegen besteht insbesondere für die Inhalte-Anbieter wie z.B. Firmen der Musik- und Verlagsindustrie ein Bedarf an standardisierten und skalierbaren Lösungen für ein Lizenzmanagement.

Der Erfindung liegt die Aufgabe zugrunde, zumindest einen Teil der angegebenen Nachteile von herkömmlichen Verfahren zum Speichern, Verwalten und Anwenden von Rechten zur Nutzung einer Ressource zu verbessern.

Überraschenderweise wird diese Aufgabe verfahrensseitig schon mit einem Verfahren zum Speichern, Verwalten und Anwenden von Rechten zur Nutzung einer Ressource mit den Merkmalen von Anspruch 1 gelöst. Dabei zeichnet sich das erfindungsgemäße Verfahren dadurch aus, dass der der Rechteinformation zugeordnete Datensatz im Computersystem unter Verwendung von Protokollen und Datenstrukturen eines hierarchisch strukturierten Domainnamen-Systems (DNS: Domain Name System) als zumindest eine Informationseinheit (Resource Record (RR)) gespeichert, verwaltet und zum Abruf bereitgehalten wird, wobei durch die der Ressource zugeordneten Software-Komponente an das Computersystem ein DNS-Protokoll-konformer Abruf zur Abfrage des Datensatzes gestellt wird. Zweckmäßigerweise wird der aus dem Computersystem abgerufene Datensatz von der der Ressource zugeordneten Software-Komponente zur Freigabe der Nutzung der Ressource ausgewertet.

Durch die Nutzung von Protokollen und Datenstrukturen eines hierarchisch strukturierten Domainnamen-Systems, wie es beispielsweise im Internet als weltweit zugängliches, hochverfügbares und skalierbares öffentliches System zur Verfügung steht, kann die Rechteinformation bzw. der dieser Rechteinformation zugeordnete Datensatz jederzeit weltweit verfügbar abgelegt werden. Über lokale Caches können derartige Informationen hochverfügbar vorgehalten werden. Grundlage der Erfindung ist, dass für die jeweilige Nutzungsressource im DNS ein zugeordneter Eintrag als grundlegende DNS-Informationseinheit (Resource Record (RR)) registriert ist. Bekanntermaßen wird ein solches DNS System in erster Linie zur Umsetzung von Domainnamen in IP-Adressen bzw. von IP-Adressen in Domainnamen verwendet, bei dem erfindungsgemäßen Verfahren stellt ein derartiges System darüber hinaus eine Plattform zum Speichern, Verwalten und Anwenden von Informationseinheiten wie Datensätzen bereit, welche den Nutzungsrechten einer Ressource zugeordnet sind.

Dabei können die Ressourcen, deren Nutzung durch das erfindungsgemäße Verfahren geregelt werden kann, ein sehr breites Spektrum einnehmen. Neben der Nutzung von Softwaresystemen oder einzelnen Softwaremodulen kann auch die Nutzung von Hardwarebauteilen für Geräte in Anlagen oder Fahrzeugen etc., bzw. die Nutzung von digitalen Inhalten geregelt werden. Auch die Rechteverwaltung von kompletten technischen Geräten, Anlagen, etc. oder z.B. eine personenbezogene Starterlaubnis einer Anlage, eines Gerätes oder Fahrzeuges kann über das erfindungsgemäße Verfahren implementiert werden. Neben der Nutzungskontrolle von Softwaresystemen und Geräten, Anlagen etc. deckt das erfindungsgemäße Verfahren auch die Nutzungskontrolle von digitalen Medieninhalten wie z.B. Musik oder Inhalte für TV, Mobiltelefonen, Computern oder Tablets wie Apps, digitale Zeitschriften und Bücher, elektronische Hörbücher oder ähnliches ab.

Der Aufbau eines Domain Name Systems (DNS) als auf eine Vielzahl von Servern verteilter hierarchischer Verzeichnungsdienst, der den Namensraum des Internets verwaltet, wird in den Dokumenten RFC 882 und 883 beschrieben, die zwischenzeitlich von den Dokumenten RFC 1034 und RFC 1035 abgelöst und durch zahlreiche weitere, dem Fachmann bekannte Standards ergänzt wurden. Da das DNS dem Fachmann wohlbekannt ist, muss darauf im Detail nicht weiter eingegangen werden.

Weitere erfindungsrelevante Merkmale sind der nachfolgenden allgemeinen und speziellen Beschreibung sowie den in den Unteransprüchen angegeben.

Als Computersystem zur Umsetzung des erfindungsgemäßen Verfahrens, in welchem der der Rechteinformation zugeordnete Datensatz unter Verwendung des hierarchisch strukturierten Domainnamen-Systems gespeichert wird, kann insbesondere das Internet als Zusammenschluss einer Vielzahl von Rechnern dienen.

Bei dem erfindungsgemäßen Verfahren können wie beim DNS-Standard sogenannte autoritative Nameserver implementiert werden, welche einen Datensatz als DNS-Resource Record (RR) speichern und welche jeweils für eine Zone verantwortlich zeichnen, wobei deren Informationen über diese Zone als gesichert angesehen werden. Nicht-autoritative Nameserver beziehen ihre Informationen über eine Zone quasi aus zweiter oder dritter Hand des verteilten und hierarchischen Verzeichnungsdienstes, diese Informationen sind als nicht gesichert anzusehen.

Um eine Prüfung der Authentizität des Eintrags im DNS bereitzustellen, kann erfindungsgemäß vorgesehen sein, dass der der Rechteinformation zugeordnete Datensatz signiert und als signierter Datensatz und in der Nomenklatur des DNS als Resource Record (RR) im Computersystem gespeichert wird.

Die Prüfung der Authentizität des abgerufenen Datensatzes kann insbesondere innerhalb des Computersystems oder innerhalb der Softwarekomponente durchgeführt werden, welche der Ressource zugeordnet ist. Zweckmäßigerweise kann für die Signierung des Datensatzes und die Überprüfung der Authentizität des abgerufenen Datensatzes der DNSSEC (Domain Name System Security Extensions)-Standard eingesetzt werden, sodass auf eine bereits vorhandene Sicherheitsinfrastruktur zurückgegriffen werden kann und der Lizenzgeber nicht zum DNSSEC parallele Sicherheitsstrukturen und Schlüssel-Konzepte aufbauen muss. Bei dem erfindungsgemäßen Verfahren können wie beim DNSSEC-Standard sogenannte autoritative Nameserver implementiert werden, auf welchem die digitalen Signaturen über die in den Servern abgelegten Resource Records realisiert sind. Durch dieses Verfahren ist sichergestellt, dass die in den Resource Records abgelegten Daten authentisch sind. Da dem Fachmann wohlbekannt, muss vorliegend auch nicht auf die aktuellen Standards der DNSSEC eingegangen werden, die aktuellen sind in den RFCs 4033, 4034 und 4035 dokumentiert.

Bei dem erfindungsgemäßen Verfahren wird eine der Ressource zugeordnete Software-Komponente (im Folgenden auch als Rechte-Agent bezeichnet) verwendet, um auf den Datensatz im DNS-System, welcher der Rechteinformation der Ressource zugeordnet ist, zuzugreifen.

In einer Ausführungsform kann es zweckmäßig sein, die der jeweiligen Ressource zugeordnete Rechteinformation direkt in dem Datensatz im DNS-System zu speichern. Damit sind keine weiteren Abfragen notwendig, sodass bei Vorliegen der jeweiligen Rechteinformation die Ressource freigegeben werden kann. Bei anderen Ausführungsformen des erfindungsgemäßen Verfahrens kann jedoch vorgesehen sein, dass der im DNS-System abgelegte und der Rechteinformation der Ressource zugeordnete Datensatz eine Referenz wie ein Verweis auf einen weiteren Datensatz aufweist, wobei mittels dieser Referenz die Rechteinformation beispielsweise durch die der Ressource zugeordneten Software-Komponente von einem weiteren Computersystem abgerufen wird. In einer spezifischen Ausführungsform sind somit die Informationen für die Nutzungsrechte der Ressource über einen externen Service wie einen Lizenz-Server abrufbar, wobei eine Referenz auf diesen externen Service im Resource Record (RR) des DNS-Systems gespeichert ist. In dem der Ressource zugeordneten Rechte-Agenten (Softwarekomponente) ist in dieser Ausführungsform ein Verfahren implementiert, mit dem die Rechteinformation zur Ressource von diesem Service abgerufen werden kann.

Dabei kann erfindungsgemäß auch vorgesehen sein, dass ein Teil einer Referenz wie eines Verweises auf den Datensatz in der Software-Komponente, welche der Ressource zugeordnet ist, vorgespeichert oder an diese übermittelt wird. In solchen Fällen, in welchen nur ein Teil einer Referenz enthalten ist oder übermittelt wird, ist das Programm so eingerichtet, dass auf der Grundlage dieses Teils eine vollständige Referenz gebildet und mit dieser Referenz der Datensatz vom Computersystem unter Verwendung der Protokolle und Datenstrukturen des hierarchisch strukturierten Domainnamen-systems abgerufen wird.

Bei dem erfindungsgemäßen Verfahren ist vorgesehen, dass der jeweiligen Ressource eine Software-Komponente (der Rechte-Agent) zugeordnet ist, über welche der Vorgang des Abrufs der jeweiligen Rechteinformation durchgeführt bzw. zumindest eingeleitet wird. Diese Software-Komponente kann je nach spezifischer Ressource als Software-Teilkomponente in der zu nutzenden Ressource selbst integriert sein oder auch als eine zur nutzenden Ressource externe Softwarekomponente ausgeführt sein, welche jeweils über seine implementierten Verfahren die Ressource kontrolliert, konfiguriert und für die Nutzung gemäß der definierten Rechte zulässt. Besteht die Ressource beispielsweise aus einer Software, kann die besagte Software-Komponente als Rechte-Agent in der Software integriert sein. Umfasst die Ressource eine Hardware, kann der Rechte-Agent beispielsweise im Betriebssystem der Hardware implementiert sein. In solchen Fällen, bei welchen die Ressource einen digitalen Inhalt darstellt, kann der Rechte-Agent beispielsweise im Betriebssystem des Wiedergabegerätes für den digitalen Inhalt implementiert sein, wobei der Rechte-Agent aus dem jeweiligen digitalen Inhalt Informationen in Form einer Referenz wie eines Verweises entnehmen kann, wo die jeweilige Rechteinformation oder ein Hinweis darauf abgerufen werden kann.

Ist die Rechteinformation beispielsweise direkt im Resource Record im DNS abgelegt, kann dem Rechte-Agenten die jeweilige URL (Uniform Ressource Locator) innerhalb des DNS bekannt sein. In einer Ausführungsform kann diese beispielsweise bei der Vorbereitung der Ressource, z.B. beim Vorbereiten einer Software für den Download im Rechte-Agent oder in der Ressource selbst verankert werden. In weiteren Ausführungsformen kann der Rechte-Agent diese URL bzw. individuelle Merkmale wie eine Referenz, insbesondere einen Verweis für den Abruf des Resource Records über einen separaten Kommunikationskanal von einem externen Computersystem, beispielsweise von einem externen Bestellsystem oder einem mit dem Rechte-Agent in Verbindung stehenden persönlichen Gerät (Personal Device) des Nutzers wie einem PDA (Personal Digital Assistant), einem NFC-Handy oder einem Tablet erhalten. Durch die Übermittlung von einem solchen Personal Device kann z.B. in einer besonderen Ausprägung der Erfindung ein spezifisch für die nutzende Person eingerichteter Resource Record vom zentralen DNS abgerufen werden.

Um die Verwaltung einschließlich der Übermittlung der Rechteinformation gegenüber Datenübertragungsfehlern bzw. Manipulationen sicherer zu gestalten, kann das Bilden eines ersten Prüfwertes auf der Grundlage einer ersten Prüfwertfunktion vorgesehen sein, wobei bei der Prüfwertbildung die Rechteinformation oder Teile der Rechteinformation verwendet und der erste Prüfwert in den Datensatz im DNS-System eingetragen wird. Für eine solche Prüfwertfunktion kann beispielsweise eine Hash-Funktion, insbesondere eine kryptografische Hash-Funktion oder eine Funktion zur zyklischen Redundanzprüfung sein. Um in der der Ressource zugeordneten Software-Komponente einen entsprechenden Vergleich durchzuführen, kann zweckmäßigerweise vorgesehen sein, dass diese eine zu der ersten Prüfwertfunktion analoge zweite Prüfwertfunktion zum Bilden eines zweiten Prüfwertes umfasst und nach Erhalt der Rechteinformation über die darin enthaltenen Daten von der Software-Komponente der zweite Prüfwert erzeugt und nachfolgend mit dem ersten Prüfwert des Datensatzes verglichen wird. Ergibt der Vergleich eine Identität, kann die Nutzung der Ressource erlaubt werden.

In einer Ausführungsform der Erfindung mit einem externen Service zur Verwaltung der Rechteinformation kann vorgesehen sein, dass nach dem Abruf des Datensatzes (Resource Record) über die dort eingetragenen Serviceinformationen in Form einer Referenz wie eines Verweises ein Lizenz-Record von einem externen Lizenzservice, beispielsweise in einem externen Computersystem abgerufen wird. Dabei kann in einer besonderen Ausführungsform im Datensatz (Resource Record) neben dem Verweis auf das externe Computersystem noch ein Prüfwert eingetragen sein. Dieser Prüfwert kann beispielsweise über relevante Teile der Rechteinformation gebildet sein und in den Datensatz (Resource Record) auf dem DNS-System authentisch abgelegt sein. Die der Ressource zugeordnete Software-Komponente (Rechte-Agent) bildet einen Prüfwert über die Rechteinformation aus dem Lizenzservice oder Teilen daraus nach der gleichen Bildungsvorschrift und vergleicht den so neu erzeugten Wert mit dem Prüfwert aus dem Datensatz (Resource Record) des DNS.

In bestimmten Anwendungsformen des erfindungsgemäßen Verfahrens kann es zweckmäßig sein, wenn die der jeweiligen Ressource zugeordnete Software-Komponente ein voreingestelltes, individuelles Prüfwertmerkmal aufweist, das in die zweite Prüfwertfunktion zur Prüfwerterzeugung einbezogen wird zum Bilden eines zweiten, individuellen Prüfwertes. Es versteht sich, dass dieses, die jeweilige Software-Komponente individualisierende Merkmal auch in die obenstehend beschriebene feste Prüfwertfunktion eingebunden wird, sodass durch den Rechte-Agenten wie beschrieben erster und zweiter Prüfwert verglichen und bei Identität die Ressource freigegeben werden kann.

Es kann zweckmäßig sein, wenn in die zweite Prüfwertfunktion zur Bildung des zweiten Prüfwertes individuelle Daten oder Konfigurationen, welche der jeweiligen freizugebenden Ressource zugeordnet oder Bestandteile dieser sind, mit einbezogen werden. Hierbei kann es sich beispielsweise um ein die Ressource kennzeichnendes Merkmal oder mehrere derartiger Merkmale handeln, welche insbesondere die Art, die Dauer oder andere Betriebsdaten und/oder Betriebsparameter der Ressource festlegen.

Ferner kann auch vorgesehen sein, dass der besagte zweite Prüfwert in der Software-Komponente, welcher der Ressource zugeordnet ist, nicht berechnet, sondern fest abgelegt ist. Auch in dieser Ausführungsform des erfindungsgemäßen Verfahrens wird durch die Software-Komponente der erste Prüfwert, d.h. der im Datensatz (Resource Record) des DNS niedergelegte Prüfwert, mit dem fest in der Software-Komponente abgelegte Prüfwert verglichen und bei positivem Ergebnis des Vergleichs die Nutzung der Ressource erlaubt.

In einer besonderen Ausprägung der Erfindung kann vorgesehen sein, dass der besagte Prüfwert nicht durch die Software-Komponente erzeugt oder in dieser niedergelegt wird, sondern stattdessen über eine Datenschnittstelle oder manuelle Eingabe vom Rechte-Agenten erhalten wird, wobei wiederum durch den Rechte-Agenten der zweite Prüfwert mit dem im Datensatz enthaltenen ersten Prüfwert verglichen und abhängig vom Ergebnis des Vergleichs die Nutzung der Ressource erlaubt bzw. freigegeben wird.

In einer anderen Ausführungsform kann es auch zweckmäßig sein, wenn eine Referenz wie ein Verweis zum Abruf des Datensatzes im DNS über eine mit der der Ressource zugeordneten Software-Komponente in Verbindungen stehendes weiteres Computersystem übermittelt wird oder durch eine manuelle Eingabe die Software-Komponente diese Referenz, beispielsweise in Form einer URL, erhält. Durch Ansprechen dieser Referenz kann die Software-Komponente, der Rechte-Agent, dann den im DNS niedergelegten Datensatz abrufen.

Grundsätzlich kann die Rechteinformation der Ressource in dem Datensatz, der im DNS gespeichert ist, abgelegt sein; es kann in einer anderen Ausführungsform jedoch auch vorgesehen sein, dass auf der Basis dieses abgerufenen Datensatzes die Rechteinformation von der der Ressource zugeordneten Software-Komponente nachfolgend von einem weiteren Computersystem abgerufen wird.

Zweckmäßigerweise kann vorgesehen sein, dass der aus dem DNS abgerufene Datensatz Serviceinformationen für das Laden einer Ressource über ein entferntes Computersystem aufweist oder dass diese Serviceinformation über ein weiteres Computersystem an die der Ressource zugeordneten Software-Komponente (Rechte-Agent) übertragen wird.

Das erfindungsgemäße Verfahren kann vorteilhaft auch bei einer sich bewegenden Ressource verwendet werden, beispielsweise im Zusammenhang mit einem Kraftfahrzeug, wobei die Ressource beispielsweise das Kfz selbst oder eine Funktionseinheit des KFZ wie eine Audiokomponente sein kann.

Zweckmäßigerweise kann die Rechteinformation und/oder der der Ressource zugeordnete Datensatz im DNS Ausführungsparameter umfassen, insbesondere Betriebsparameter für die Ressource, welche für die Steuerung der Nutzung der Ressource verwendet werden können. Ein solcher Ausführungsparameter kann beispielsweise die Nutzungsdauer oder die Betriebszeit der Ressource sein.

In einer besonderen Ausführungsform kann auch vorgesehen sein, dass die zu nutzende Ressource an die ihr zugeordnete Software-Komponente Informationen übermittelt, welche für den Aufbau einer Referenz zum Abruf des ersten Datensatzes aus dem DNS verwendet wird. Diese Information kann beispielsweise eine URL umfassen.

Um den administrativen Aufwand für das erfindungsgemäße Verfahren zu reduzieren, kann vorgesehen sein, dass der der zu nutzenden Ressource zugeordnete Datensatz, der im DNS gespeichert ist, eine Positiv-Liste oder eine Referenz wie einen Verweis auf eine solche Positiv-Liste umfasst, wobei die Software-Komponente nach Abruf des Datensatzes aus dem DNS die Positiv-Liste überprüft und die Ressource zur Nutzung freigibt, wenn ein individuelles Merkmal der Software-Komponente und/oder ein individuelles Merkmal der Ressource selbst in der Positiv-Liste vorhanden ist. Dabei kann diese Positiv-Liste auch einen Parameter für die Ausführung der Ressource enthalten. Mittels der Berücksichtigung einer solchen Liste kann einerseits innerhalb eines Datensatzes eine Mehrzahl von Ressourcen mit Rechteinformationen versehen werden, darüber hinaus ist es auch möglich, die Freigabe oder Nichtfreigabe der Ressource von einer Vielzahl von Parametern der zugeordneten Software-Komponente bzw. der Ressource selbst abhängig zu machen.

Bei dem erfindungsgemäßen Verfahren kann auch vorgesehen sein, dass der der zu nutzenden Ressource zugeordnete Datensatz, der im DNS gespeichert ist, eine Negativ-Liste oder eine Referenz wie einen Verweis auf eine solche Negativ-Liste umfasst, wobei die Software-Komponente nach Abruf des Datensatzes aus dem DNS die Negativ-Liste überprüft und die Ressource zur Nutzung nicht freigibt, wenn ein individuelles Merkmal der Software-Komponente und/oder ein individuelles Merkmal der Ressource selbst in der Negativ-Liste vorhanden ist. Mittels der Berücksichtigung einer solchen Liste kann einerseits innerhalb eines Datensatzes eine Mehrzahl von Ressourcen mit Rechteinformationen versehen werden, darüber hinaus ist es auch möglich, die Freigabe oder Nichtfreigabe der Ressource von einer Vielzahl von Parametern der zugeordneten Software-Komponente bzw. der Ressource selbst abhängig zu machen. Es versteht sich, dass die Verwendung der obenstehend erläuterten Positiv-Liste kombiniert werden kann mit der Verwendung einer solchen Negativ-Liste.

Zweckmäßigerweise wird der der Ressource zugeordnete Datensatz, welcher im DNS gespeichert wird, im Zusammenhang mit der Herstellung, Installation und/oder Konfiguration der Ressource in das Computersystem eingetragen. Insbesondere in solchen Fällen, bei welchen der im DNS abgelegte Datensatz die Rechteinformation nicht direkt umfasst, kann es zweckmäßig sein, dass die Rechteinformation in ein weiteres Computersystem im Zusammenhang mit der Herstellung, Installation und/oder Konfiguration der Ressource eingetragen wird.

Die Erfindung betrifft ferner eine Anordnung mit mehreren Computersystemen zur Durchführung eines der obenstehend beschriebenen Verfahren sowie ein Computerprogrammprodukt, das auf einem computerlesbaren Medium gespeichert und eingerichtet ist, um in einer Anordnung mit mehreren Computersystemen die Durchführung eines dieser Verfahren zu bewirken.

Die Erfindung wird im Folgenden durch das Beschreiben einiger Ausführungsformen unter Bezugnahme auf die beiliegenden Figuren beschrieben, wobei
- Figur 1: eine Anordnung von vernetzten Computersystemen zur Durchführung eines ersten erfindungsgemäßen Verfahrens zum Speichern, Verwalten und Anwenden von Rechten zur Nutzung einer Ressource,
- Figur 2: eine weitere Anordnung von vernetzten Computersystemen zur Durchführung eines zweiten erfindungsgemäßen Verfahrens,
- Figur 3: eine weitere Anordnung von vernetzten Computersystemen zur Durchführung eines dritten erfindungsgemäßen Verfahrens,
- Figur 4: eine weitere Anordnung von vernetzten Computersystemen zur Durchführung eines vierten erfindungsgemäßen Verfahrens,
- Figur 5: eine weitere Anordnung von vernetzten Computersystemen zur Durchführung eines fünften erfindungsgemäßen Verfahrens, und
- Figur 6: eine weitere Anordnung von vernetzten Computersystemen zur Durchführung eines sechsten erfindungsgemäßen Verfahrens
zeigt.

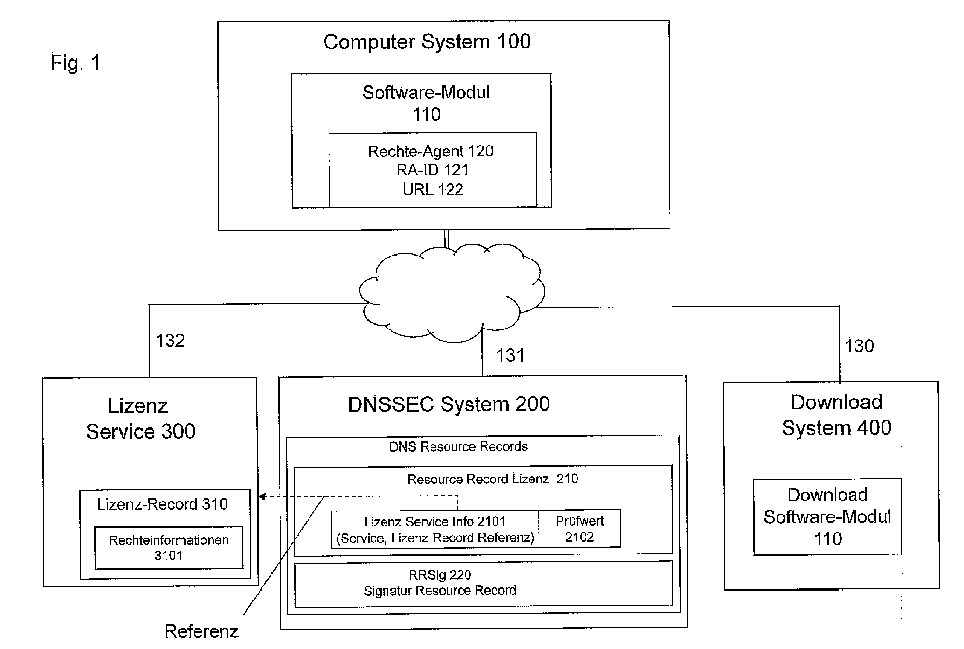

In dem in Fig. 1 dargestellten ersten Ausführungsbeispiel der vorliegenden Erfindung ist ein Rechte-Agent 120 als integrale Software-Komponente in ein Software-Modul 110 integriert. Das Software-Modul 110 stellt in diesem Beispiel die zu nutzende Ressource dar und soll auf einem Computer-system 100 ausgeführt werden. In einer bevorzugten Implementierung dieses Ausführungsbeispiels ist der Rechte-Agent 120 eine beim Herstellungsprozess (z.B. beim Link-Prozess) des Software-Moduls 110 fest eingebrachte Software-Komponente. Eine Referenz auf das für den Rechte-Agenten 120 zuständige DNSSEC System 200 in Form einer URL 122 (Uniform Resource Locator) sowie eine ID des Rechte-Agenten RA-ID 121 sind in diesem Ausführungsbeispiel ebenfalls in dem Rechte-Agenten fest abgelegt.

Das Computer System 100 und das DNSSEC System 200 sind Computersysteme, welche einen oder mehrere, datenverbundene Computer umfassen, die in der beschriebenen Ausführungsform über das Internet miteinander gekoppelt bzw. Teil dieses weltweiten Netzwerkes sein können. Gleiches gilt für den in Fig. 1 angegebenen und untenstehend erläuterten Lizenz Service 300.

In einer Ausführungsform der Erfindung können die URL 122 und die Identifikationsdaten RA-ID 121 nach der Herstellung der Software bzw. bei der Vorbereitung des Software-Moduls für den Software-Download in den Rechte-Agenten 120 fest eingetragen bzw. konfiguriert werden. Das so vorbereitete Software-Modul 110 wird in diesem Ausführungsbeispiel zusammen mit dem Rechte-Agenten 120 durch ein Downloadverfahren über eine Internetverbindung 130 von dem Download System 400, das selbst wiederum ein Computersystem darstellt, auf das Computersystem 100 geladen.

Nach dem Download des Software-Moduls 110 des ComputerSystems 100 hat der Rechte-Agent 120 über eine InternetVerbindung 131 und entsprechende DNS Protokolle Zugriff auf das DNSSEC System 200.Im Computersystem des Lizenz Service 300 ist ein Lizenz-Record 310 eingetragen. Dieser Lizenz-Record enthält die für die Nutzung des Software-Moduls 110 relevanten Rechteinformationen 3101, welche vom Rechte-Agenten 120 zur Freigabe der Resource geprüft werden. Zu diesem Lizenz Service 300 kann der Rechte-Agent 120 nach dem Download des Software-Moduls 110 ebenfalls vom Computersystem 100 aus einer Kommunikationsverbindung, insbesondere eine Internetverbindung 132 aufbauen.

Vor der Nutzung des Software-Moduls 110 wird als Datensatz der Resource Record Lizenz 210 in einen autoritativen Nameserver des DNSSEC Systems 200 eingetragen. In einer Ausprägung der in Fig. 1 angegebenen Ausführungsform kann die Eintragung des Resource Record Lizenz 210 während oder nach der Vorbereitung bzw. Durchführung des Downloads des Software-Moduls 110, z.B. veranlasst durch das Download System 400, durchgeführt werden.

In dem mit Bezug auf Figur 1 beschriebenen Ausführungsbeispiel der vorliegenden Erfindung enthält der Datensatz des Resource Record Lizenz 210 einen Prüfwert 2102. Dieser Prüfwert wird durch eine Prüfwertfunktion über verschiedene, die Nutzungsrechte definierenden Werte gebildet. Diese Werte sind auch in den Rechteinformationen 3101 im Lizenz Record 310 auf dem Lizenz Service 300 eingetragen, der in der angegebenen Ausführungsform auch als Computersystem ausgebildet ist.

In einer Ausprägung des Ausführungsbeispieles wird der Prüfwert 2102 als Hash-Wert über die die Nutzungsrechte festlegenden Werte gebildet.

In einer weiteren Ausprägung des erfindungsgemäßen Verfahrens können bei der Prüfwert-Generierung auch Prüfwertmerkmale des Rechte-Agenten, wie z.B. die RA-ID 121, mit einbezogen werden. Über diese im Rechte-Agenten verankerten Prüfwertmerkmale wird somit ein für den Rechte-Agenten individueller Prüfwert gebildet. In diesem Falle existiert für die Prüfwertmerkmale des jeweiligen Rechte-Agenten ein eigener Datensatz im DNS System als Resource Record Lizenz 210.

In einer speziellen Ausprägung des mit Bezug auf Figur 1 beschriebenen Ausführungsbeispiels werden bei der Vorbereitung des Downloads des Software-Moduls 110 im Download System 400 die relevanten Nutzungsrecht-Daten für die Rechteinformationen 3101 des Lizenz Record 310 und die Prüfwertmerkmale des Rechte-Agenten festgelegt (z.B. RA-ID 121). Über diese Werte wird dann der Prüfwert 2102 des Resource Record Lizenz 210 generiert. Der Prüfwert 2102 wird dann in den Resource Record Lizenz 210 eingetragen, welcher im DNSSEC System 200 mittels der bekannten DNS-Verfahren gespeichert wird.

Weitere Elemente des Resource Record Lizenz 210 in dem mit Bezug auf Fig. 1 beschriebenen Ausführungsbeispiel sind eine in der Lizenz Service Information 2101 abgelegte Referenz auf den Lizenz Service 300 mit der Identifikation des dort abrufbaren relevanten Lizenz Records 310, welcher die Rechteinformationen 3101 umfasst. Diese Referenz in Form eines Verweises von der Lizenz Service Info 2101 im DNS- Datensatz des Resource Records Lizenz 210 auf den Datensatz Lizenz-Record 310, welcher auf dem Lizenz Service 300 abgelegt ist, ist in Figur 1 mit einem gestrichelten Pfeil angedeutet.

Mittels der Standard DNSSEC Mechanismen wird in der beschriebenen Ausführungsform bei der Eintragung des Resource Records Lizenz 210 zusätzlich ein Datensatz RRSig 220 (Signature Resource Record) entsprechend der relevanten DNSSEC Standardmethoden gebildet und im DNS System zum Abruf abgelegt. Dieser Datensatz RRSig 220 stellt eine digitale Signatur des Resource Records Lizenz 210 gemäß des DNSSEC Standards dar, mit der die Authentizität und die Integrität des signierten Resource Records Lizenz 210 überprüft werden kann.

In einer Ausprägung des Ausführungsbeispiels gemäß Fig. 1 wird der Resource Record Lizenz 210 auf Veranlassung des Download Systems 400 nach erfolgtem Download des Software-Moduls 110 oder während der Vorbereitung des Software-Moduls 110 vor dem Download in das DNSSEC System 200 eingetragen.

In dieser Hinsicht zeigt Fig. 1 gekoppelte bzw. vernetzte Computersysteme, welche für den Abruf der der Ressource zugeordneten Rechteinformation vorbereitet sind, sodass beim Vorliegen dieser Information im Rechte-Agent dann von diesem entschieden werden kann, ob die Ressource zur Nutzung freigegeben werden kann oder nicht.

Nach dem Download des Software-Moduls 110 vom Download System 400 über die Internetverbindung 130 kann das Modul 110 im Computersystem 100 gestartet werden. Dabei wird die im Software-Modul integrierte Software-Komponente Rechte-Agent 120 aufgerufen. Diese ruft wiederum den Resource Record Lizenz 210 vom bekannten DNSSEC System 200 nach den DNS bzw. DNSSEC Standards ab.

Anhand der Standard DNSSEC Mechanismen kann der Rechte-Agent 120 die Authentizität und Integrität der Daten des Resource Records Lizenz 210 überprüfen.

Der Rechte-Agent 120 analysiert den Resource Record Lizenz 210 und erkennt anhand der dort abgelegten Lizenz Service Informationen 2101 wie und wo der für den Rechte-Agenten und die Ressource relevante Lizenz Record 310 abzurufen ist. Der Rechte-Agent 120 ruft in der Ausführungsform gemäß Fig. 1 den Lizenz-Record 310 vom Lizenz-Service 300 über die Internetverbindung 132 ab.

In der beschriebenen Ausführungsform wertet der Rechte-Agent 120 nach dem Abruf des Lizenz-Records 310 die darin enthaltenen Rechteinformationen 3101 aus und bildet einen Prüfwert 2102' über die relevanten Werte der Rechteinformation aus dem Lizenz-Record 310 analog zur Prüfwertbildung des Prüfwertes 2102. Er verwendet hierbei dieselbe Prüfwertfunktion sowie dieselben Werte, welche auch für die Bildung des Prüfwerts 2102 für den Resource Record Lizenz 210 verwendet wurden. Der Rechte-Agent 120 vergleicht den gebildeten Prüfwert 2102' mit dem Prüfwert 2102 aus dem Resource Record Lizenz 210 des DNSSEC Systems mittels einer Vergleichsfunktion. Wenn beide Werte übereinstimmen, kann der Rechte-Agent 120 davon ausgehen, dass die dem Lizenz Service 300 über den Lizenz-Record 310 abgerufenen Rechteinformationen 3101 authentisch ist, da der Vergleich mit dem über das DNSSEC System authentisch abgelegten Prüfwert 2102 dies bestätigt.

Bei der Prüfwert-Bildung sowohl für den Prüfwert 2102 als auch für den Prüfwert 2102' können, in einer besonderen Ausprägung der beschriebenen Ausführungsform, auch im Rechte-Agenten abgelegte Prüfwertmerkmale (z.B. dessen Identifikationsnummer RA-ID 121) mit in die Prüfwertgenerierung einbezogen werden. In diesem Falle wird ein für den Rechte-Agenten 120 individueller Prüfwert gebildet.

Nachdem durch den Prüfwert-Vergleich die relevanten Werte der Rechteinformation 3101 des Lizenz-Records 310 positiv geprüft wurden, erlaubt der Rechte-Agent 120 die Ausführung des Software-Moduls 110 auf dem Computer-System 100.

In einer weiteren Ausprägung der beschriebenen Ausführungsform können bei der Ausführung des Software-Moduls 110 zusätzlich Ausführungs-Parameter verwendet werden, die vorher durch den Rechte-Agenten 120 aus dem Lizenz-Record 310 oder den Rechteinformationen 3101 oder dem Resource Record Lizenz 210 ausgelesen werden.

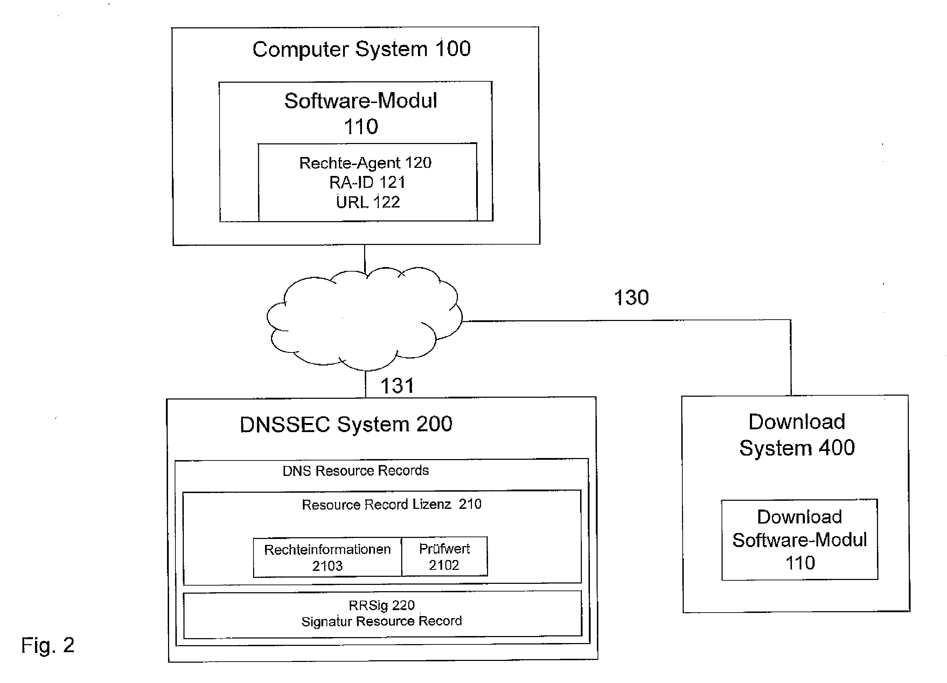

In einer weiteren Ausführungsform des erfindungsgemäßen Verfahrens bzw. eines Systems zur Durchführung eines solchen Verfahrens, welches im Folgenden mit Bezug auf in Fig. 2 dargestellt wird, werden die Rechteinformationen 2103, welche die Nutzungsrechte der Ressource Software Modul 110 definieren, nicht in einem separaten Computersystem für einen Lizenz-Service, sondern direkt in dem Resource Record Lizenz 210 des DNSSEC Systems 200 abgelegt. Ein wesentlicher Unterschied zu der mit Bezug auf Fig. 1 beschriebenen Ausführungsform des erfindungsgemäßen Verfahrens besteht demnach darin, das der Rechte-Agent 120 die Rechteinformationen 2103 nun direkt über den Resource Record Lizenz 210 aus dem DNSSEC System 200 abruft. Darüber hinaus ist das wiederum als Computersystem ausgebildete Download System 400 in der in Figur 2 angegebenen Ausführungsform wie bei der Ausführungsform gemäß Fig. 1 über eine Internetverbindung 130 mit dem Computersystem 100 verbunden zur Übermittlung des Software-Moduls an das Computersystem 100.

In der Ausführungsform gemäß Fig. 2 geht bei der Bildung eines Vergleichs-Prüfwerts 2102' durch den Rechte-Agenten dessen Prüfwertmerkmal d RA-ID 121 mit in die Generierungsvorschrift ein. Dadurch wird ein für den Rechte-Agenten 120 individueller Prüfwert 2102' gebildet, welcher von dem Rechte-Agenten 120 mit dem im Resource Record Lizenz 210 eingetragenen Prüfwert 2102 verglichen wird. Damit kann durch den Rechte-Agenten die Authentizität der Rechteinformationen 2103 kontrolliert und überprüft werden, ob die Rechteinformationen auch für den prüfenden Rechte-Agenten bestimmt sind.

In der Ausführungsform gemäß Fig. 2 wird in einer besonderen Ausprägung die Identifikation des Rechte-Agenten RA-ID 121, welche später als Prüfwertmerkmal verwendet wird, bei der Vorbereitung des Software-Downloads des Software-Moduls 110 bereitgestellt, und gemeinsam mit der für den Abruf des Resource Record Lizenz relevanten URL 122 in den Rechte-Agenten eingetragen.

Auch in diesem Ausführungsbeispiel können beim Start des Software-Moduls 110 Parameter verwendet werden, die durch den Rechte-Agenten 120 aus dem Resource Records Lizenz 210 oder den Rechteinformationen 2103 durch den Rechte-Agenten 120 ausgelesen und für die Ausführung der Software des Software-Moduls verwendet werden.

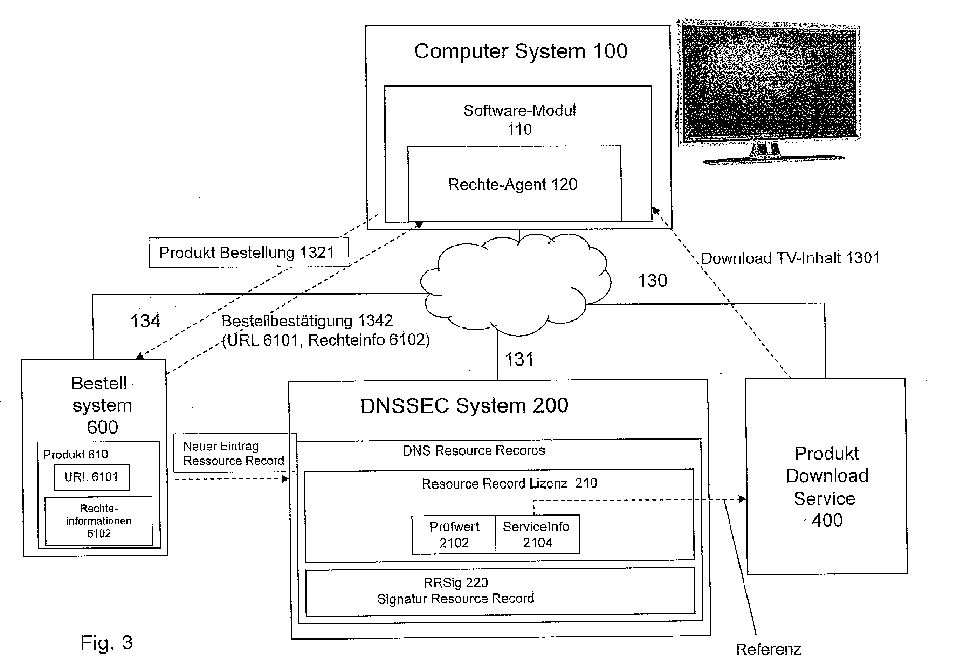

In einer weiteren Ausführungsform gemäß Fig. 3 wird eine URL oder ein Bestandteil einer URL 6101 zum Abruf des Resource Records Lizenz 210 vom DNSSEC System 200 über einen Kommunikationskanal 134, welcher in der beschriebenen Ausführungsform wiederum über das Internet verläuft, von einem Bestellsystem 600 abgerufen an den Rechte-Agenten 120 übergeben. Diese URL stellt eine Referenz dar und wird für den Abruf des Resource Records Lizenz 210 vom Rechte-Agent 120 verwendet. Falls nur ein Bestandteil der URL übermittelt wird, erzeugt der Rechte-Agent die komplette URL aus dem übermittelten URL-Bestandteil und den bereits vorhandenen Informationen.

In einer Ausprägung dieser Ausführungsform des erfindungsgemäßen Verfahrens ist das Computer-System 100 in einem Internet-fähigen Fernsehgerät implementiert und der Nutzer des Software-Moduls 110, welches den Rechte-Agenten 120 als Komponente enthält, sendet von dem Internet-fähigen Fernsehgerät (Computer System 100) über den Kommunikationskanal 134 eine Produkt Bestellung 1321 für ein Produkt, welches hier die Ressource darstellt (z.B. ein TV- Inhalt), an ein als Bestellsystem 600 ausgebildetes Computersystem. Das Bestellsystem 600 sendet dann, z.B. nach der Durchführung einer Bezahltransaktion oder einer Verbuchung für einen registrierten Benutzer im Bestellsystem, eine Bestellbestätigung 1342 über den Kommunikationskanal 134 zurück, in der die relevante URL 6101 für den Abruf des Resource Record Lizenz 210 enthalten ist. In einer Ausprägung dieses Ausführungsbeispiels werden in der Bestellbestätigung 1342 ebenfalls zum TV-Produkt gehörende und für die Nutzung des Produktes durch den Nutzer geltende Rechteinformationen 6102 an den Rechte-Agenten 120 übermittelt. Der Resource Record Lizenz 210 kann dann vom Rechte-Agenten 120 über die übermittelte URL aus dem DNS-System abgerufen und gemäß den DNSSEC Mechanismen auf Authentizität geprüft werden. Über einen Prüfwertvergleich eines über relevante Daten der Rechteinformationen 6102 erzeugten Prüfwerts 2102' mit dem Prüfwert 2102 des Resource Record Lizenz 210, kann die Authentizität der Nutzungsrechte in den übermittelten Rechteinformationen 6102 nachgewiesen werden.

Zur Klarheit der Darstellung sei ausdrücklich darauf hingewiesen, dass bei der Ausführungsform des erfindungsgemäßen Verfahrens gemäß Fig. 3 im Unterschied zu den vorhergehenden Ausführungsformen nicht das Software-Modul 110 sondern der TV-Inhalt die eigentliche Ressource darstellt, welche vom Produkt Download Service 400 über den Kommunikationskanal 130, der wiederum eine Internetverbindung darstellt, abgerufen wird, was untenstehend näher erläutert wird.

In einer weiteren Ausprägung der Ausführungsform gemäß Fig. 3 kann der Resource Record Lizenz 210 weitere Informationen über das Produkt enthalten. Zum Beispiel können über den Datensatz 210 Service-Informationen 2104 an das Software-Modul 110 übermittelt werden, welche Informationen für den Produkt-Download von dem Product Download Service 400 enthalten. Insofern kann die ServiceInfo 2104 Informationen wie eine Referenz darüber enthalten, wie und wo der angeforderte TV-Inhalt abgerufen werden kann.

In einer alternativen Ausprägung des Ausführungsbeispiels werden die Service-Informationen nicht im Resource Record Lizenz 210 hinterlegt, sondern werden ebenfalls über die Bestellbestätigung 1342 an das Software-Modul 110 übermittelt.

In einer bevorzugten Ausprägung des Ausführungsbeispiels wird ein neuer Eintrag eines für ein Produkt bestimmten Resource Records Lizenz 210 durch das Bestellsystem 600 im DNSSEC System 200 ausgelöst, bevor eine Bestellung des Produktes zulässig ist bzw. durchgeführt werden kann.

Ein mit den Systemen gemäß Fig. 3 durchgeführten erfindungsgemäßen Verfahren läuft beispielsweise wie folgt ab. Ein Nutzer des Computersystems 100 startet das Softwaremodul 110 mit integriertem Rechte-Agenten 120 und übermittelt über die Internetverbindung 134 eine Produktbestellung 1342 an das Bestellsystem 600. Im Ansprechen auf die Bestellung werden der für den Rechte-Agent individualisierte Prüfwert 2102 sowie die ServiceInfo 2104 erzeugt und als Resource Record Lizenz 210 zusammen mit der diesbezüglichen Signatur RRSig 220 in das DNSSEC System 200 eingetragen. Das Bestellsystem 600 übermittelt an den Rechte-Agenten 120 über den Kommunikationskanal 134 die Bestellbestätigung 1342, welche die URL 6101 zum Herunterladen der Datensatzes Lizenz 210 aus dem DNSSEC System 200 sowie Rechteinformation 6102 umfasst. Der Rechte-Agent lädt sodann den Resource Record Lizenz 210 und überprüft die Authentizität dieses Datensatzes. Sodann vergleicht der Rechte-Agent 120 den Prüfwert 2102 mit dem selbst ermittelten Prüfwert 2102'. Bei Gleichheit der Prüfwerte entnimmt der Rechte-Agent aus der ServiceInfo 2104 eine Referenz auf den Produkt Download Service 400, von welchem über die Internetverbindung 130 dann der TV-Inhalt 1301 heruntergeladen und über das Computer System 100 wiedergegeben wird.

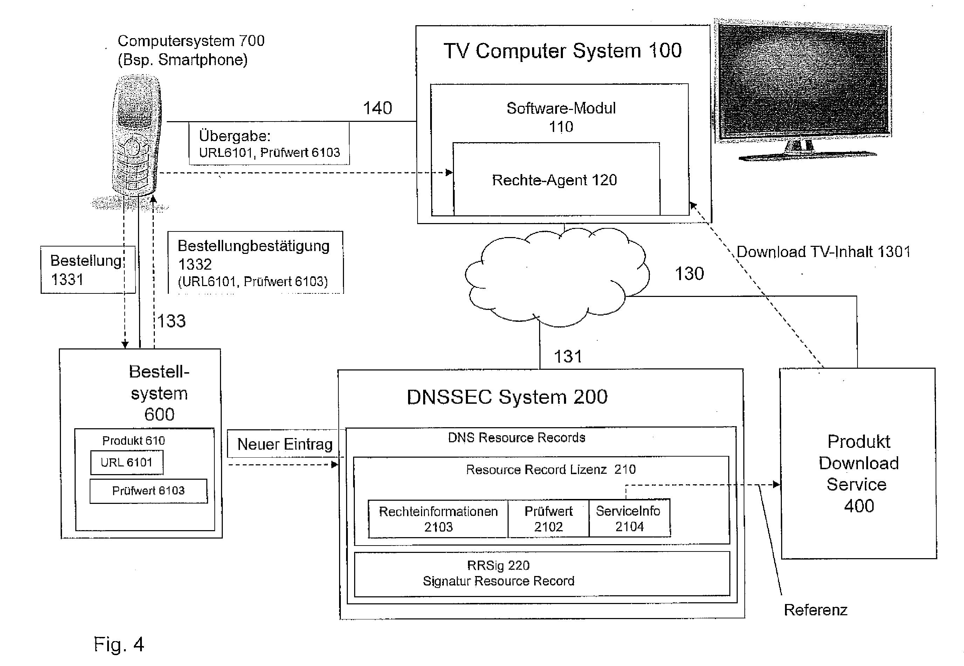

In einem weiteren Ausführungsbeispiel gemäß Fig. 4, bei welchem die Ressource wiederum ein TV-Inhalt ist, wird die Bestellung 1331 unabhängig von dem Software-Modul 110 mittels eines weiteren Computersystems 700 (z.B. Smartphone, Tablet-PC, Laptop) ausgelöst und über einen Kommunikationskanal 133 an das Bestellsystem 600 übertragen. Die vom Bestellsystem für die Bestellung an das Computersystem 700 übermittelte Bestellbestätigung 1332, welche eine URL (oder URL Bestandteil) zur Abrufung des Datensatzes Lizenz 210 aus dem DNSSEC System 200 umfasst, wird in diesem Ausführungsbeispiel von dem Computersystem 700 (z.B. Smartphone) an den Rechte-Agenten 120 übermittelt. Diese Übermittlung kann manuell, z.B. durch Ablesen vom Smartphone und Eingabe über die Fernbedienung des Fernsehgerätes, oder aber über eine elektronische kabel- bzw. kabelungebundene Datenschnittstelle 140 wie z.B. WLAN- oder NFC-Kommunikation erfolgen.

In einer Ausprägung dieses Ausführungsbeispieles wird ein Prüfwert 6103 analog zur URL aus dem Bestellsystem 600 über das Computersystem 700 und den Kommunikationskanal 140 bzw. eine manuelle Eingabe an den Rechte-Agenten 120 übergeben. Der Rechte-Agent 120 kann nun den übermittelten Prüfwert 6103 mit dem aus dem DNSSEC abgerufenen und durch die DNSSEC-Prüfung als authentisch anzunehmenden Prüfwert 2102 vergleichen.

In einer Ausprägung des Ausführungsbeispiels veranlasst das Bestellsystem 600 während oder nach dem Bestellvorgang, dass ein neuer Eintrag im DNSSEC für den die Bestellung betreffenden Resource Record Lizenz 210 durchgeführt wird. Nach der Eintragung steht dieser dann für den Abruf durch den Rechte-Agenten 120 zur Verfügung.

In einem weiteren Ausführungsbeispiel der Erfindung wird eine Positiv-Liste mit für die Nutzung zugelassenen Rechte-Agenten 120 im Resource Record Lizenz 210 eingetragen. Jeder zugelassene Rechte-Agent hat eine Identifikation RA-ID 121, welche in der Positiv-Liste eingetragen ist. Nach dem Abruf des Resource Records Lizenz 210 prüft der Rechte-Agent über seine Identifikation, ob er in der Positiv-Liste als zugelassen eingetragen ist. Das Software-Modul 110 zum Abruf bzw. zum Abspielen des angeforderten TV-Inhalts wird nur gestartet, wenn der Rechte-Agent einen entsprechenden Eintrag in der Positiv-Liste findet. Dabei ist in der ServiceInfo 2104 wiederum eine Referenz auf das System Produkt Download Service 400 angegeben, von welchem der bestellte TV-Inhalt heruntergeladen wird, soweit die beschriebenen Überprüfungen positiv verlaufen sind.

In einem alternativen Ausführungsbeispiel mit einer sogenannten Negativ-Liste wird im Resource Record Lizenz 210 eine Liste mit nicht zugelassenen Rechte-Agenten verwaltet. Nach dem Abruf des Resource Record Lizenz 210 prüft der Rechte-Agent 120 ob seine Identifikation 121 in der Negativ-Liste eingetragen ist. Das Software-Modul 110 wird nur gestartet, wenn keine Negativ-Liste vorhanden ist oder die Identifikation RA-ID 121 des Rechte-Agenten nicht in der vorhandenen Negativ-Liste eingetragen ist.

In weiteren besonderen Ausführungsbeispielen für die Positiv- oder Negativ-Liste können dort auch Identifikationen der Ressource in der Liste eingetragen sein. Über die von der Ressource erhaltene Identifikation kann der Rechte-Agent prüfen, ob ein Eintrag für die zu nutzenden Ressource in der Positiv- oder Negativ-Liste enthalten ist.

Über die DNSSEC Protokolle kann geprüft werden, ob der Resource Record mit der Positiv- oder Negativ-Liste authentisch ist.

Eine solche Positiv- oder Negativ-Liste kann in einem besonderen Ausführungsbeispiel auch in einem eigens dafür definierten DNS Resource Record verwaltet werden. Der Rechte-Agent kennt aufgrund seiner Konfigurationsdaten, wo er einen solchen Resource Record abrufen kann, oder es ist im Resource Record Lizenz 210 ein Eintrag mit einem Verweis auf eine Positiv- oder Negativ-Liste vorhanden.

In einem weiteren Ausführungsbeispiel wird in dem Rechte-Agenten 120 ein Prüfwert fest eingetragen. Dies kann z.B. im Rahmen des Software-Herstellungsprozesses der Software-Komponente oder z.B. kurz vor der Software-Auslieferung durchgeführt werden. Mit diesem "hart kodierten" Prüfwert kann ein Abgleich mit einem im Resource Record Lizenz 210 eingetragenen Prüfwert 2102 durchgeführt werden. Es kann für jedes ausgelieferte Software-Modul 110 ein individueller Prüfwert im Rechte-Agenten 120 kodiert werden. In diesem Fall wird ebenfalls ein individueller Prüfwert 2102 für jeden Rechte-Agenten im DNSSEC eingetragen. Der Rechte-Agent erlaubt den Start des Software-Moduls 110 nur bei einer positiven Prüfung des Prüfwertes.

In einem weiteren Ausführungsbeispiel wird durch den Rechte-Agenten 120 der Prüfwert gebildet, bei dem in der Funktion zur Prüfwertbildung Dateien oder Konfigurationen des Software-Moduls 110 einbezogen werden. Dadurch können eventuelle unerlaubte Veränderungen der Software festgestellt und ein Start eines veränderten Software-Moduls 110 verhindert werden. Der so gebildete Prüfwert wird dann mit dem im Resource Record Lizenz 210 eingetragenen Prüfwert 2102 verglichen, welcher analog erzeugt wurde.

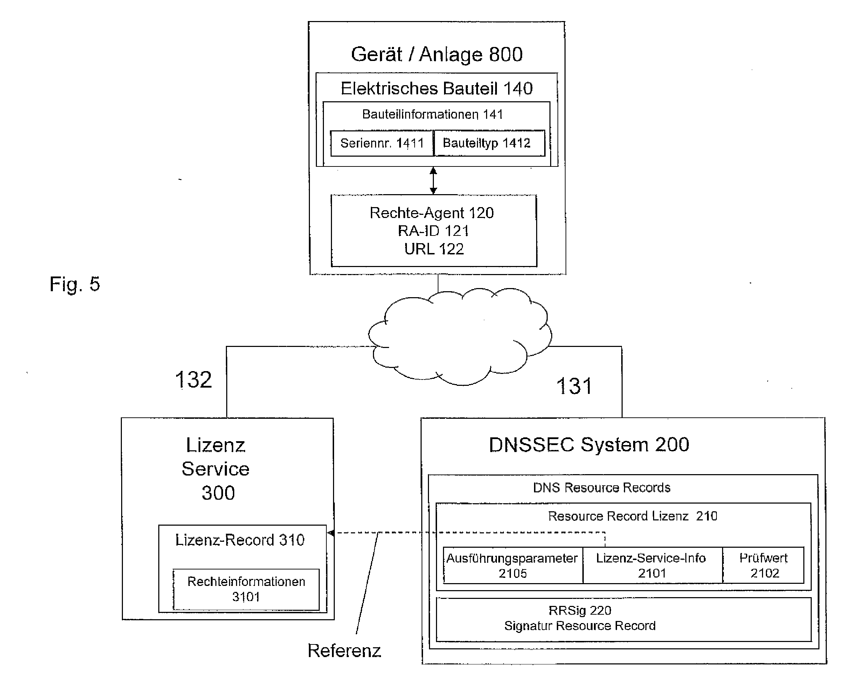

In einer weiteren Ausführungsform der Erfindung gemäß Fig. 5 wird ein Rechte-Agent 120 für die Steuerung der Nutzung eines elektronischen Hardware Bauteiles 140 außerhalb dieses Bauteiles in einer Anlage oder einem Gerät 800 implementiert, wobei dieses Bauteil 140 die zu nutzende Ressource darstellt. Der Rechte-Agent 120 kann in einer Ausprägung des Ausführungsbeispiels dabei bestimmte Informationen, wie z.B. eine Seriennummer 1411 oder den Bauteiltyp 1412, aus dem elektronischen Bauteil 140 auslesen. In einer anderen Implementierung kennt der Rechte-Agent 120 bestimmte Bauteileigenschaften und -daten aufgrund der Einrichtung bzw. der Konfiguration des elektronischen Bauteiles 140 in der Anlage 800. In dem DNSSEC System 200 wird vom Hersteller des Bauteiles 140 oder dem Lizenzgeber für das Bauteil 140 ein Eintrag als Resource Record Lizenz 210 durchgeführt. Der Resource Record Lizenz 210 enthält je nach spezieller Ausführungsform entweder selbst die eigentliche Rechteinformationen oder die Rechteinformationen sind, wie in Fig. 5 angegebenen, auf einem Lizenz Service 300 im Lizenz Record 310 gespeichert und können über eine Referenz in den Lizenz-Service-Informationen 2101 im Resource Record Lizenz 210 abgerufen werden.

Nachdem der Rechte-Agent 120 die Prüfung der Authentizität des Resource Records Lizenz 210 mit Mechanismen des DNSSEC mit positivem Ergebnis durchgeführt hat, kann er die Funktion des Bauteils gemäß der für das Bauteil gültigen Rechteinformationen starten bzw. zulassen. In dem in Fig. 5 dargestellten Ausführungsbeispiel entnimmt der Rechte-Agent 120 Ausführungsparameter 2105 aus dem Resource Record 210, die Rechtenformation 3101 lädt er mittels der im Lizenz-ServiceInfo 2101 abgelegte Referenz vom System des Lizenz Service 300 über die Internetverbindung 132 herunter und startet dann bei positiver Überprüfung die Funktion des Bauteils mit den Ausführungsparametern 2105.

Je nach spezifischer Ausführungsform sind diese Ausführungsparameter im Lizenz Record 310 des Lizenz Service 310 oder in den Rechteinformationen abgelegt.

Als Beispiel für eine solche Ausführungsform kann der Einsatz eines speziellen Chip-Bauteiles in einem Automobil genannt werden. Über an dieses Chip-Bauteil übergebene Ausführungsparameter kann z.B. die Leistungskurve des Fahrzeugs beeinflusst werden. Durch den Erwerb einer "Lizenz" (eines Rechtes) zur Steigerung der Leistung des Fahrzeuges kann über das oben genannte Ausführungsbeispiel die Berechtigung zur Nutzung von speziellen Bauteil-Parametern über einen Rechte-Agenten im Fahrzeug aktiviert werden. Dem Rechte-Agenten wird z.B. die URL übermittelt, mit welcher er an die im Resource Record Lizenz enthaltenen Parameter gelangt. Vor dem Abruf der Leistungsparameter kann z.B. noch die Gültigkeit über einen Prüfwertvergleich unter Einbeziehung eines Rechte-Agent Merkmales (z.B. RA-ID) geprüft werden. In einem anderen Beispiel wird die Rechte-Agenten Identifikation in eine Positiv-Liste des Resource Records Lizenz für die Leistungssteigerung eingetragen und der Rechte-Agent damit für den Abruf der Leistungsparameter zugelassen.

Für die Umsetzung des beschriebenen erfindungsgemäßen Verfahrens kann Fahrzeug mit einem Internetzugang (z.B. über das Mobilfunk-Netz) ausgestattet sein. Der Fahrzeugnutzer kann die Leistungsparameter über das Internet in einem Bestellsystem (z.B. über einen Browser in einem Smartphone oder einem im Fahrzeug integrierten Computersystem) kaufen und die Nutzung über den in der Erfindung dargelegten Rechte-Agenten aktivieren.

Um zu vermeiden, dass ein Abruf der Rechteinformationen vom DNSSEC System oder einem eigenen Lizenz Service bei jeder Nutzung des Bauteiles durchgeführt werden muss, können verschiedene Ausführungsformen implementiert werden.

Es sind eine Vielzahl von speziellen Ausführungsformen möglich, bei denen der DNSSEC Abruf des Resource Records Lizenz aus dem DNSSEC System 200 nur einmal pro vorgegebener Zeiteinheit oder beispielsweise bei jeder 5ten Start Sequenz etc. durchgeführt wird.

In einer weiteren Ausführungsform ist ein erneuter Abruf erst nach Ablauf des für den Resource Record Lizenz definierten "Time-to-Live" Parameters notwendig.

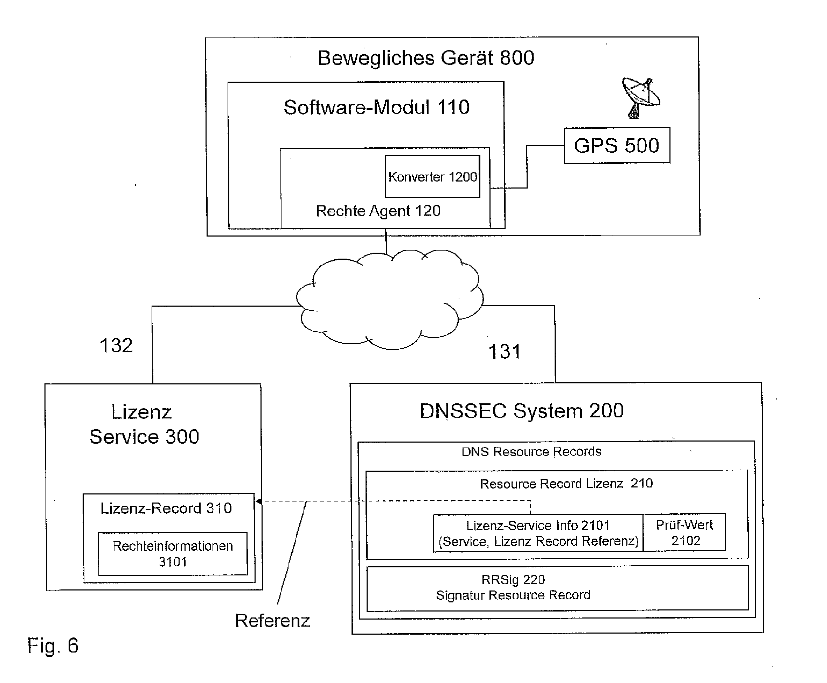

Um eine regionale Einschränkung von Rechteprofilen zu ermöglichen dient die folgende, mit Bezug auf Fig. 6 beschriebene Ausführungsform der Erfindung. In diesem Beispiel ist der Rechte-Agent 120 in einem Software-Module 110 in einem beweglichen technischen Gerät 800 integriert. Zu nutzende Ressource kann hier beispielsweise das Gerät 800 selbst oder das Software-Modul 110 des Gerätes sein. Der Rechte Agent ist an ein Positionierungssystem GPS 500 angebunden und erhält von diesem Informationen über die Region, in der sich das bewegliche technische Gerät 800 aktuell befindet. Der Rechte-Agent 120 nutzt einen Konverter 1200, um die vom GPS 500 übertragenen Positionsinformationen in eine für die identifizierte Region spezifische DNSSEC Abfrage umzusetzen. In einer Ausprägung des Ausführungsbeispiels ermittelt der Rechte-Agent über den Konverter 1200 aus den vom System GPS 500 übermittelten Längen- und Breitengraden eine Referenz auf einen für die bestimmte Region gültigen Resource Record Lizenz 210 und ruft diesen über eine Internetverbindung 131 vom DNSSEC System 200 ab. Eine so ermittelte Referenz in Form einer URL könnte beispielsweise 1234.Bayern.licence.dominic.de lauten. Ist in dem DNSSEC System 200 kein Eintrag für die vom Konverter 1200 ermittelte Referenz vorhanden, darf die Software 110 dort nicht genutzt werden. Ebenso können über diesen Mechanismus regionale Unterschiede in der Art und Weise der Nutzung durch in Regionen-spezifischen Resource Records Lizenz 210 mit unterschiedlichen Rechteinformationen implementiert werden.

In der in Figur 6 dargestellten Ausführungsform umfasst der Resource Record 210 eine Lizenz-Service Info 2101, welche eine Referenz auf den Lizenz Service 300 umfasst, von welchem der Rechte-Agent 120 über einen Kommunikationskanal, insbesondere eine Internetverbindung 132, den Lizenz-Record 310 herunterlädt, welcher die Rechteinformation 3101 beinhaltet.

In einer weiteren Ausführungsweiterbildung werden anhand der vom GPS-System übertragenen Positionsparameter im Konverter des Rechte-Agenten zeitzonen-spezifische Resource Record Lizenz abgerufen und für das Nutzungsmanagement verwendet, beispielsweise www.PCT.licence.dominic.de, www.CET.licence.dominic.de, etc.

In einem besonderen Ausführungsbeispiel ist das Positionierungssystem nicht als externes Modul implementiert sondern in den Rechte-Agenten integriert.

In nicht näher beschriebenen Ausführungsformen ist bei den vorstehend beschriebenen erfindungsgemäßen Verfahren der hierarchische Verzeichnisdienst, in welchem der der Ressource zugeordnete Datensatz abgelegt ist, als normales DNS-System ohne die Möglichkeit zur Überprüfung der Authentizität und der Datenintegrität des im DNS System abgelegten Datensatzes ausgebildet. Da eine Signierung der jeweiligen Datensätze entfällt, erniedrigt sich der administrative Aufwand bei der Umsetzung des erfindungsgemäßen Verfahrens.

## Patentansprüche

1. Verfahren zum Speichern, Verwalten und Anwenden von Rechten zur Nutzung einer Ressource, bei welchem ein Nutzungsrecht der Ressource (110, 140) durch eine Rechteinformation (, 3101, 2103, 6102) festlegt wird, und die der Ressource zugeordnete Rechteinformation mittels einer der Ressource zugeordneten Software-Komponente (120) abgefragt und ausgewertet wird, und die Nutzung der Ressource gemäß der dieser Ressource zugeordneten Rechteinformation freigegeben wird, wobei ein der Rechteinformation der Ressource zugeordneter Datensatz (210) in einem Computersystem (200) gespeichert wird, **dadurch gekennzeichnet, dass** der der Rechteinformation (3101,2103, 6102) zugeordnete Datensatz (210) im Computersystem (200) unter Verwendung von Protokollen und Datenstrukturen eines hierarchisch strukturierten Domainnamen-Systems (DNS: Domain Name System) als zumindest eine Informationseinheit (Resource Record (RR)) gespeichert, verwaltet und zum Abruf bereitgehalten wird, wobei durch die der Ressource zugeordneten Software-Komponente (120) an das Computersystem (200) ein DNS-Protokoll-konformer Abruf zur Abfrage des Datensatzes (210) gestellt wird.

2. Verfahren nach Anspruch 1, **dadurch gekennzeichnet, dass** der Datensatz (210) signiert und als signierter Datensatz im Computersystem (200) gespeichert wird und die Authentizität des abgerufenen Datensatzes innerhalb des Computersystems und/oder von der der Ressource zugeordneten Software-Komponente (120) überprüft wird.

3. Verfahren nach Anspruch 1 oder 2, **dadurch gekennzeichnet, dass** eine Referenz oder ein Teil einer Referenz auf den Datensatz in der der Ressource (110, 140) zugeordneten Software-Komponente (120) vorgespeichert oder an diese übermittelt wird und im Falle, dass nur ein Teil einer Referenz enthalten oder übermittelt wird, auf der Grundlage diesen Teils eine vollständige Referenz ermittelt wird, und mit dieser Referenz der Datensatz (210) vom Computersystem (200) abgerufen wird.

4. Verfahren nach einem der Ansprüche 1 bis 3, **dadurch gekennzeichnet, dass** die Rechteinformation (2103) in dem Datensatz (210) gespeichert wird.

5. Verfahren nach einem der Ansprüche 1 bis 3, **dadurch gekennzeichnet, dass** der Datensatz (210) eine Referenz auf einen weiteren Datensatz (310) aufweist, wobei mittels der Referenz die Rechteinformation (3101) durch die der Ressource zugeordneten Software-Komponente von einem weiteren Computersystem (300) abgerufen wird.

6. Verfahren nach einem der Ansprüche 1 bis 5, **gekennzeichnet durch** das Bilden eines ersten Prüfwertes (2102) auf der Grundlage einer ersten Prüfwertfunktion, wobei bei der Prüfwertbildung die Rechteinformationen oder Teile der Rechteinformationen verwendet und der erste Prüfwert in den Datensatz (210) eingetragen werden.

7. Verfahren nach Anspruch 6, **dadurch gekennzeichnet, dass** die der Ressource (110, 140) zugeordneten Software-Komponente (120) eine zu der ersten Prüfwertfunktion analoge zweite Prüfwertfunktion zum Bilden eines zweiten Prüfwerts umfasst, und nach Erhalt der Rechteinformationen (3101, 2103, 6102) über die darin enthaltenen Daten von der Software-Komponente (120) ein zweiter Prüfwert erzeugt und mit dem ersten Prüfwert (2102) des Datensatzes (210) verglichen wird, wobei bei positivem Ergebnis die Nutzung der Ressource erlaubt wird.

8. Verfahren nach Anspruch 7, **dadurch gekennzeichnet, dass** die der Ressource zugeordneten Software-Komponente (120) ein voreingestelltes, individuelles Prüfwertmerkmal (121) aufweist, das in die zweite Prüfwertfunktion zur Prüfwerterzeugung einbezogen wird zum Bilden eines zweiten, individuellen Prüfwertes.

9. Verfahren nach Anspruch 7 oder 8, **dadurch gekennzeichnet, dass** in die zweite Prüfwertfunktion zur Bildung des zweiten Prüfwertes individuelle Daten oder Konfigurationen, die der Ressource zugeordnet sind oder Bestandteil dieser sind, mit einbezogen werden.

10. Verfahren nach Anspruch 6, **dadurch gekennzeichnet, dass** in die der Ressource (110, 140) zugeordneten Software-Komponente (120) ein zweiter Prüfwert fest eingetragen ist und die Software-Komponente (120) diesen Prüfwert mit dem im ersten Datensatz (210) enthaltenen ersten Prüfwert (2102) vergleicht und bei positivem Ergebnis des Vergleichs die Nutzung der Ressource erlaubt.

11. Verfahren nach Anspruch 6, **dadurch gekennzeichnet, dass** an die der Ressource (110, 140) zugeordnete Software-Komponente (120) über eine Datenschnittstelle oder eine manuelle Eingabe ein zweiter Prüfwert übergeben wird und die Software-Komponente diesen mit dem im Datensatz (210) enthaltenen ersten Prüfwert (2102) vergleicht und bei positivem Ergebnis des Vergleichs die Nutzung der Ressource erlaubt wird.

12. Verfahren nach einem der Ansprüche 3 bis 11, **dadurch gekennzeichnet, dass** die Referenz oder ein Teil dieser Referenz zum Abruf des Datensatzes (210) von einem mit der der Ressource zugeordneten Software-Komponente (120) in Verbindung stehendem weiteren Computersystem (700, 600) übermittelt werden oder durch mittels der Software-Komponente (120) bereitgestellte manuelle Eingabe an diese übermittelt wird.

13. Verfahren nach einem der Ansprüche 1 bis 12, **dadurch gekennzeichnet, dass** die Rechteinformationen (6102) der Ressource von einem weiteren Computersystem (600) an die der Ressource zugeordnete Software-Komponente (120) übermittelt wird.

14. Verfahren nach einem der Ansprüche 1 bis 13, **dadurch gekennzeichnet, dass** eine Service Information (2104) für das Laden einer Ressource über ein entferntes Computersystem (400) im Datensatz enthalten ist oder über ein weiteres Computer-system (600, 300) an die der Ressource zugeordnete Software-Komponente (120) übertragen wird.

15. Verfahren nach einem der Ansprüche 1 bis 14, **dadurch gekennzeichnet, dass** die der Ressource (110, 140) zugeordnete Software-Komponente (120) von einem Positionserfassungssystem (500) Positionsinformation über den aktuellen Aufenthaltsort der Ressource erhält und in Abhängigkeit von dieser Positionsinformation einen, den aktuellen Aufenthaltsort der Ressource zugeordneten Datensatz (210) aus dem ersten Computersystem (200) abruft.

16. Verfahren nach einem der Ansprüche 1 bis 15, **dadurch gekennzeichnet, dass** in der Rechteinformation und/oder dem ersten Datensatz (210) Ausführungsparameter (2105) für die Ressource enthalten sind, welche für die Steuerung der Nutzung der Ressource verwendet werden.

17. Verfahren nach einem der Ansprüche 3 bis 16, **dadurch gekennzeichnet, dass** die zu nutzende Ressource an die zugeordnete Software-Komponente (120) Information übermittelt, welche für den Aufbau der Referenz zum Abruf des ersten Datensatzes (210) verwendet werden.

18. Anordnung mit einer Mehrzahl von Computersystemen zur Durchführung eines Verfahrens nach einem der Ansprüche 1 bis 17.

19. Computerprogrammprodukt, gespeichert auf einem computerlesbaren Medium und eingerichtet um in einer Anordnung mit einer Mehrzahl von Computersystemen die Durchführung eines Verfahrens nach einem der Ansprüche 1 bis 17 zu bewirken.
